# EUROPÄISCHE PATENTSCHRIFT

(11) **EP 2 765 353 B1**
(45) Veröffentlichungstag und Bekanntmachung des Hinweises auf die Patenterteilung: **07.11.2018**
(21) Anmeldenummer: 13154212.8
(22) Anmeldetag: 06.02.2013
(51) Int. Cl.: F21V 8/00, F21V 7/00

(54) **Leuchte mit einer Lichtleitscheibenanordnung**
Lamp with a Light conducting disc assembly
Lampe avec une un arrangement de Disque conducteur de lumière

(43) Veröffentlichungstag der Anmeldung: 13.08.2014
(73) Patentinhaber: Engel, Hartmut S., 71634 Ludwigsburg (DE)
(72) Erfinder: Engel, Hartmut S., 71634 Ludwigsburg (DE)
(74) Vertreter: Manitz Finsterwald Patentanwälte PartmbB

(56) Entgegenhaltungen:
- EP-A1- 2 061 092
- EP-A1- 2 508 798
- EP-A2- 2 422 964
- WO-A1-2010/052366
- US-A1- 2007 165 976

## Beschreibung

Die Erfindung betrifft eine Leuchte mit einer Lichtleitscheibenanordnung zur Innenraumbeleuchtung und zur Beleuchtung von Arbeitsplätzen, insbesondere Pendel- oder Anbauleuchte, die zumindest eine polierte Stirnfläche zur Einkopplung von Licht mittels einer Mehrzahl von an der jeweiligen Stirnfläche anliegenden LEDs aufweist, wobei die transparent und insbesondere klar durchsichtig ausgebildete Lichtleitscheibe in zumindest zwei zueinander parallelen Ebenen jeweils ein vollflächiges, eine Lichtreflexion und Lichtstreuung bewirkendes, von Lichtauskopplungselementen gebildetes Punktraster aufweist.

Lichtleitscheiben mit seitlicher Einkopplung von LED-Licht werden vor allem in Backlightsystemen für Displays, aber auch bereits im Zusammenhang mit Leuchten verwendet, die insbesondere zur Innenraumbeleuchtung und zur Beleuchtung von Arbeitsplätzen eingesetzt werden, wobei diese Leuchten die Vorteile der Langlebigkeit und des geringen Energieverbrauchs der als Leuchtmittel verwendeten LEDs nutzen.

Aus der EP 2 508 798 A1 ist eine Lichtleitplatte mit stirnseitiger Einkopplung von LED-Licht bekannt, wobei die transparent ausgebildete Lichtleitscheibe in zwei zueinander parallelen Ebenen jeweils ein vollflächiges, eine Lichtreflexion und Lichtstreuung wirkendes, von Lichtauskopplungselementen gebildetes Punktraster aufweist. Mittels einer derartigen Lichtleitplatte können die beleuchtete Hinweisschilder und relativ große Werbetafeln realisiert werden, insbesondere jedoch auch Trennwände in Räumen, die dann, wenn die Lichtquellen nicht zugeschaltet sind, klar durchsichtig erscheinen und bei zugeschaltetem LED-Licht eine undurchsichtige, senkrecht stehende und eine Trennwand bildende Flächenlichtquelle realisieren.

Aus der WO 2010/052366 A1 ist eine Lichtleitscheibenanordnung bekannt, bei der wiederum in die Stirnflächen der Lichtscheiben LED-Licht eingekoppelt wird und die transparent ausgebildete Lichtleitscheibenanordnung in zumindest zwei zueinander parallelen Ebenen über sein vollflächiges, in die Lichtreflexion und Lichtstreuung wirkendes, von Lichtauskopplungselementen gebildetes Punktraster aufweist. Diese bekannte Lichtleitscheibenanordnung dient ausschließlich als Backlightquelle, die demgemäß Licht nur in einer Richtung abstrahlen soll, um eine bestmögliche Displaybeleuchtung zu gewährleisten.
Von zur Innenraumbeleuchtung und zur Beleuchtung von Arbeitsplätzen dienenden Leuchten wird einerseits gefordert, dass die Licht in Richtung der Arbeitsflächen abstrahlenden Lichtleitscheiben einen so hohen Lichtstrom aufweisen, dass der jeweilige Arbeitsplatz optimal ausgeleuchtet werden kann, und andererseits störende Blendungen, hervorgerufen durch Flächen zu hoher Leuchtdichte, vermieden wird.

Gemäß bestehender Normen für Büroarbeitsplätze sind zu helle Lichtquellen, die im Gesichtsfeld Blendung hervorrufen können, in geeigneter Weise abzuschirmen. Für Leuchten, die unten offen bzw. mit einer Abdeckung versehen sind, ist der geforderte Abschirmwinkel definiert als der Winkel zwischen der horizontalen Ebene und der Blickrichtung, unter der die leuchtenden Teile bzw. leuchtenden Flächen der Leuchte gerade sichtbar werden. Gemäß solcher bestehender Normen muss neben der Direktblendung durch Flächen zu hoher Leuchtdichte darauf geachtet werden, dass von durch Reflexe an spiegelnden Oberflächen verursachte Blendung, die so genannte Reflexblendung, vermieden wird. Diese Reflexblendung kann das Arbeiten an einem Bildschirm oder unter Umständen an einer Tastatur durch Spiegelung leuchtender Leuchtenteile zu hoher Leuchtdichte erheblich beeinträchtigen, d.h. auch derartige Reflexblendung ist zu verhindern.

Bei herkömmlichen Leuchten mit einer Lichtleitscheibe werden zur Lichtauskopplung und zur Einhaltung der geschilderten Bestimmungen den Lichtleiteinheiten weiße Reflektorfolien zur Auskopplung von Direktlicht und opale Diffusor- oder Mikroprismatikscheiben zur Ausblendung für den raumseitigen Lichtaustritt zugeordnet, um die raumseitige Leuchtdichte zu reduzieren.

Aufgabe der Erfindung ist es, eine Lichtleitscheibe der eingangs beschriebenen Art so auszugestalten, dass unter Aufrechterhaltung der Möglichkeit des Durchschauens durch die Lichtleitscheibe im nicht eingeschalteten Zustand der Leuchte sichergestellt ist, dass im eingeschalteten Zustand der Leuchte die bestehenden Forderungen nach Aufteilung des eingekoppelten Lichts in Direktlicht und Indirektlicht sowie die Forderung nach Vermeidung von Blendung bzw. Reflexblendung in vollem Umfange erfüllt werden können.

Ausgehend von der eingangs definierten Leuchte mit einer Lichtscheibenanordnung wird diese Aufgabe nach der Erfindung im Wesentlichen dadurch gelöst, dass die Lichtleitscheibe zweiteilig ausgebildet ist und aus zwei aneinanderliegenden Teil-Lichtleitscheiben besteht, von denen jede an einer ihrer Oberflächen mit einem Punktraster versehen ist, dass die Teil-Lichtleitscheiben derart angeordnet sind, dass die Punktraster an der Oberseite und der Unterseite der geschichteten Anordnung gelegen sind, dass die in verschiedenen Ebenen gelegenen Punktraster einerseits zur Vorgabe des jeweils nach unten abgestrahlten Direktlichts und des nach oben abgestrahlten Indirektlichtanteils ausbildet und andererseits zur Erzielung einer raumseitigen Ausblendwirkung aufeinanderfolgend um einen vorgebbaren Winkel relativ zueinander verdreht angeordnet sind.

Durch die gemäß der Erfindung vorgesehene Zweiteiligkeit der Lichtleitscheibe wird aufgrund von Reflektionseffekten an der Kontaktebene beider Scheiben eine besonders hohe Lichtausbeute bei optimaler Helligkeit zur Teilung über die Gesamtfläche erzielt und bei hoher Lichtauskopplung eine gut vorgebbare Aufteilung in Direktlicht und Indirektlicht erreicht. Außerdem wird in überraschenderweise sichergestellt, dass die geforderte raumseitige Entblendung bzw. Vermeidung von Reflexblendung ohne zusätzliche Maßnahmen, wie z.B. dem Einsatz zusätzlicher Prismatikfolien oder opaler Folien, gewährleistet werden kann. Von besonderer Bedeutung ist dabei, dass bei nicht eingeschalteter Leuchte die Durchsichtigkeit, d.h. die Möglichkeit des Durchschauens durch die Lichtscheibe analog einer Fensterscheibe stets erhalten bleibt.

Bevorzugt sind die die Punktraster bildenden Lichtauskopplungselemente in jeder Punktrasterebene auf zueinander parallelen Geraden angeordnet und auf beabstandeten Geraden zueinander versetzt.
Die Lichtauskopplungselemente werden bevorzugt von in die jeweilige Oberfläche eingeprägten dreidimensionalen, z.B. spitzkegelförmigen oder pyramidenförmigen Prismen oder auf die jeweilige Oberfläche aufgedruckten, hochweißen Punkten gebildet, die bevorzugt weniger als 20% der Gesamtoberfläche bedecken und einen Durchmesser von vorzugsweise weniger als 0,5 mm aufweisen. Lichtauskopplungselemente können auch durch Laserung auf einer Oberfläche und sogar im Inneren der jeweiligen Lichtleitscheibe gebildet werden.

In jeder Ebene werden gleiche oder zumindest gleichartige Punktraster vorgesehen und diese Punktraster werden zur Entblendung und zur Vermeidung von Reflexblendung um einen bevorzugt 90° betragenden Winkel relativ zueinander verdreht angeordnet.
Dadurch gelingt es, nicht nur den jeweiligen Anteil an direktem Licht und indirektem Licht markant beeinflussen zu können, sondern ohne zusätzliche Mikroprismatik- oder opale Scheiben die raumseitigen Leuchtdichtewerte innerhalb der zulässigen Grenzen zu halten, und zwar ohne Beeinträchtigung der vollen Durchsichtigkeit der Lichtleitscheibe im nicht eingeschalteten Zustand der Leuchte. Dies gilt für alle Ausführungsvarianten der vorliegenden Erfindung.

Nach einer bevorzugten Ausgestaltung der Erfindung besteht die Lichtleitscheibe aus zwei identischen quadratischen, jeweils an einer Oberfläche mit dem Strukturmuster versehenen Teil-Lichtleitscheiben, wobei diese beiden aneinander anliegenden Teil-Lichtleitscheiben bezogen auf die Orientierung der Strukturmuster um 90° gegeneinander verdreht angeordnet sind.
Dadurch wird wiederum eine virtuelle Mikroprismatik geschaffen und durch die Zweischeibenauskopplung unter Sicherstellung der geforderten raumseitigen Entblendung der Direkt- und Indirektlichtanteil erhöht.

Ein wesentlicher Vorteil der zweiteiligen Ausgestaltung der Lichtleitscheibe liegt darin, dass durch unterschiedliche Kombination der jeweiligen Position der Auskopplungsebene bzw. Punktrasterfläche die Lichtverteilung des Direktlichtanteils und des Indirektlichtanteils beeinflusst, und zwar in Richtung "breiter" beeinflusst werden kann.

Es können demgemäß die Teil-Lichtleitscheiben derart angeordnet werden, dass die Punktraster an der Oberseite und der Unterseite der geschichteten Anordnung gelegen sind, wie dies im Regelfall auch bei einer einteiligen Lichtleitscheibe der Fall ist. Während jedoch bei einer einteiligen Lichtleitscheibe die die Lichtauskopplungselemente bildenden Prägungen so ausgeführt werden müssen, dass sich die erfindungsgemäß geforderte Verdrehung zur Schaffung der virtuellen Mikroprismatik ergibt, können im Falle der zweiteiligen Ausgestaltung der Lichtleitscheibe, z.B. bei einer quadratischen Ausführungsform, zwei identisch geprägte Scheiben eingesetzt werden, da in diesem Falle dann nur die Scheiben gegeneinander verdreht müssen.

Im Vergleich zu einer herkömmlichen, nur an ihrer Oberseite mit Lichtauskopplungselementen versehenen Lichtleitscheibe ergibt sich durch die Verdopplung der Lichtauskopplungspunkte eine deutlich erhöhte Lichtauskopplung mit mehr direktem und mehr indirektem Licht und etwas breiterer Abstrahlcharakteristik, wenn bei der erfindungsgemäßen Zweischeibenlösung zwei Platten übereinander angeordnet sind und die Rasterprägung jeweils an der Oberseite der jeweiligen Platten vorgesehen ist und die LED-Streifen das Licht in der Weise in die beiden Platten einkoppeln, dass jeweils etwa die Hälfte des zur Verfügung stehenden Lichts in eine der beiden Platten eingekoppelt wird.

Werden zwei Scheiben übereinander so eingebaut, dass die obere Scheibe die Prägung an der Oberseite und die untere Scheibe die Prägung an der Unterseite hat, ergibt sich mehr Indirektlicht bei etwas breiterer Abstrahlung und vergleichbarem Indirektlicht.
Werden beide Teillichtleitscheiben so kombiniert, dass beide Prägungen in der Mitte aufeinanderliegen, so erhält man wiederum die hinsichtlich der geforderten Ausblendung wirksame virtuelle Mikroprismatik und die Lichtverteilung ist dabei deutlich zugunsten des Indirektlichts bei ausreichendem Direktlicht verändert.

Alle Stirnflächen der Lichtleitscheibe, die nicht zur Lichteinkopplung verwendet werden, sind nicht poliert und/oder durch eine weiße Reflektorfolie ergänzt, um an diesen Stirnseiten einen Lichtaustritt zu verhindern und sicherzustellen, dass Licht, das auf diese nicht polierten Stirnflächen auftritt, wieder zurück in die Lichtleitscheibe reflektiert wird.

Im Falle der Verwendung zweiteiliger Lichtleitscheiben ist es möglich, den übereinander und aneinandergrenzend gelegenen Stirnseiten jeweils eine eigene LED-Leiste zuzuordnen, um eine maximale Lichteinkopplung zu realisieren, aber diese Ausgestaltung ermöglicht es auch, LED-Leisten unterschiedlicher Lichttemperatur zu verwenden, um gesteuert Mischlicht zu erzeugen, d.h. es kann indirektes oder auch direktes Licht entsprechend temperiert abgestrahlt werden. Diese Lösung hat den Vorteil, dass die doppelte Lichtleistung bei gleichem Scheibenformat in die jeweilige Leuchteneinheit installiert werden kann, so dass auch bei den Mischsituationen, bei denen die einzelnen Lichttemperaturen zur Mischung gedimmt werden müssen, noch genügend Lichtstrom für die raumseitig gelegene Arbeitsfläche verfügbar ist.

Die erfindungsgemäße Lichtleitscheibe zeichnet sich dadurch aus, dass sie praktisch bei allen Leuchtenkonstruktionen vorteilhaft eingesetzt werden kann, bei denen als Leuchtmittel eine Mehrzahl von LEDs, insbesondere in Streifenform, vorgesehen ist und bei denen von Bedeutung ist, dass im nicht eingeschalteten Zustand der Leuchte eine volle Transparenz der Lichtleitscheibe gegeben ist, d.h. dass man durch die Lichtleitscheibe wie durch eine Fensterscheibe schauen kann, und bei eingeschalteter Leuchte trotz hoher, in Direktlicht und Indirektlicht aufteilbarer Lichtleistung Blendungen bzw. Reflexblendung ohne zusätzliche Maßnahmen verhindert werden.

Ausführungsbeispiele der Erfindung werden nachfolgend unter Bezugnahme auf die Zeichnungen erläutert.
- Fig. 1: eine schematische Schnittansicht einer mit einer zweiteiligen Lichtleitscheibe gemäß der Erfindung ausgerüsteten Pendelleuchte,
- Fig. 2: Darstellungen einer einteiligen Lichtleitscheibe mit zwei gegeneinander verdrehten Punktrastern,
- Fig. 3: Darstellungen einer zweiteiligen Lichtleitscheibe mit einseitig geprägten Teil-Lichtleitscheiben,
- Fig. 4: eine zweiteilige Lichtleitscheibe mit einseitig geprägten Teil-Lichtleitscheiben,
- Fig. 5: eine zweiteilige Lichtleitscheibe, bei der die Prägungen der Teil-Lichtleitscheiben aneinander liegen, und
- Fig. 6: eine einteilige Lichtleitscheibe mit innenliegender zweiter Prismatikebene.

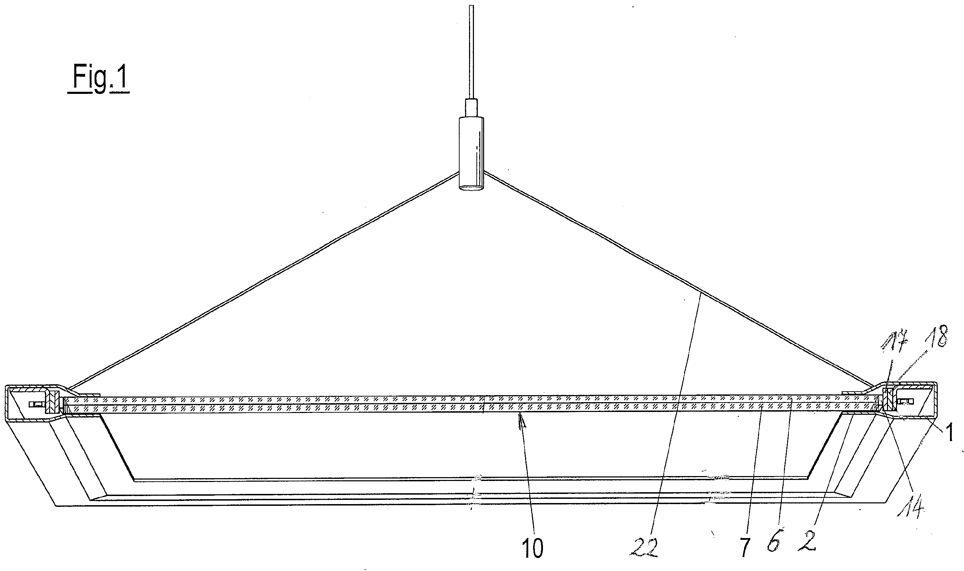

Fig. 1 zeigt ein Beispiel für eine Anwendung einer erfindungsgemäßen Lichtleitscheibe 10 in einer Pendelleuchte, bei der in einem sehr geringe Bauhöhe aufweisenden flachen Profilrahmen 1 die Lichtleitscheibe 10 randseitig gehaltert ist. Die Bauhöhe dieses Flachrahmens liegt in der Größenordnung der Dicke der Lichtleitscheibe 10, bzw. ist diese Bauhöhe nur geringfügig höher, wenn dies die Unterbringung der LED-Leisten 14 erfordert.
An zumindest zwei einander gegenüberliegenden Stirnseiten der Lichtleitscheibe 10 sind zur Einstrahlung von Licht in die Lichtleitscheibe LED-Leisten 14 vorgesehen, die an Trägerelementen 17, vorzugsweise unter Zwischenschaltung einer elastischen, wärmeleitenden Schicht 18 angebracht sind. Der Rahmen 1 ist mittels Seilen 22 aufgehängt, die gleichzeitig elektrische Zuleitungen zur Speisung der LED-Leisten 14 bilden. Die zum Betrieb der Leuchte erforderlichen elektronischen Komponenten sind bevorzugt in einer separaten, deckenseitig vorgesehenen Einheit untergebracht. Damit liegt eine extrem flache, im ausgeschalteten Zustand durchsichtige und elegante Pendelleuchte vor, bei der das eigentliche Lichtelement praktisch auf den Flachrahmen und die transparente Lichtauskoppelscheibe reduziert ist und aufgrund der Ausnutzung der Trageseile als Energiezuführleitung jegliches zusätzliche, sichtbare Kabel vermieden wird, das die Transparenz der Pendelleuchte stark stören und außerdem zur Folge haben würde, dass eine Schattenbildung im Deckenbereich durch das Kabel nicht zu vermeiden wäre.

Die gezeigte Lichtleitscheibe 10 ist in diesem Falle zweiteilig ausgeführt und besteht aus einer oberen Teil-Lichtleitscheibe 6 und einer unteren Teil-Lichtleitscheibe 7. Jede dieser Teil-Lichtleitscheiben 6, 7 ist mit einem vollflächigen Punktraster bzw. Strukturmuster 11 versehen, wobei die das jeweilige Punktraster bildenden Licht-Auskopplungselemente bevorzugt auf zueinander parallelen Geraden angeordnet und auf beabstandeten Geraden zueinander versetzt sind.
Die möglichen Ausgestaltungen und Kombinationen dieser Teil-Lichtleitscheiben 6, 7 werden nachfolgend ebenso beschrieben, wie die Verwendung einer einteiligen Lichtleitscheibe 10.

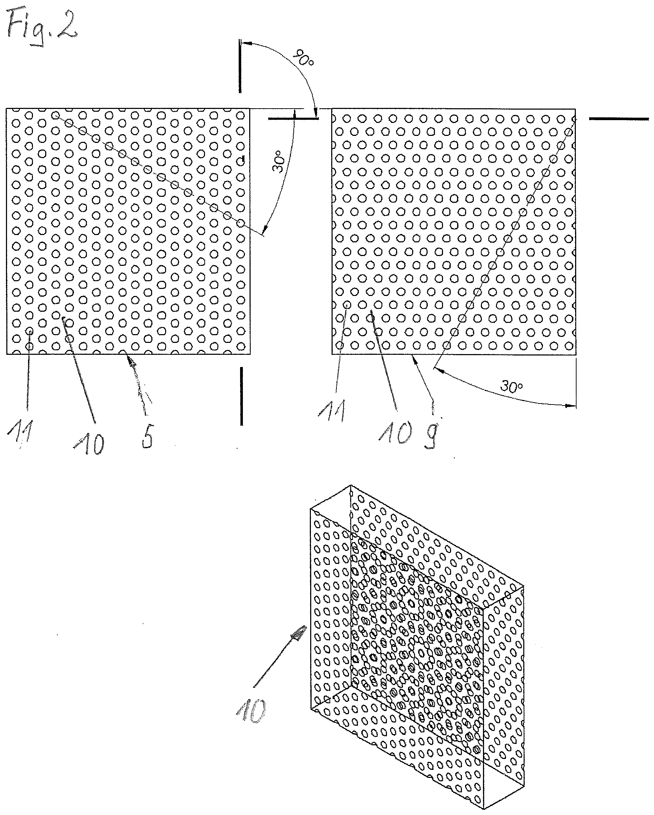

Fig. 2 zeigt ein Beispiel einer einteiligen Lichtleitscheibe 10, die an ihren beiden Oberflächen mit Punktrastern bzw. Strukturmustern 11 versehen ist. Das an der Oberseite 5 der Lichtleitscheibe 10 vorgesehene Punktraster 11 und das an der Unterseite 9 vorgesehene Punktraster 11 sind hinsichtlich ihrer Prägung zwar identisch ausgeführt, aber die Muster an der Oberseite und an der Unterseite der Lichtleitscheibe 10 sind um 90° zueinander verdreht ausgeführt, was gleichbedeutend damit ist, dass Oberseite und Unterseite unterschiedlich geprägt werden müssen.
Wie die perspektivische Darstellung erkennen lässt, ergibt sich durch das Zusammenwirken der an Oberseite 5 und Unterseite 9 vorgesehenen Strukturmuster ein virtuelles Gesamtmuster bzw. eine virtuelle Mikroprismatik.
Dabei ist von Bedeutung, dass die Lichtleitscheibe 10 dann, wenn sie nicht mit Licht beaufschlagt ist, transparent ist, d.h. dass sie mit einer durchsichtigen Fensterscheibe vergleichbar ist, während bei Beaufschlagung mit Licht die vorgesehenen Strukturmuster die wirksame Auskopplung von raumseitigem Direktlicht und deckenseitigem Indirektlicht bewirken und überraschenderweise gleichzeitig gewährleisten, dass trotz der angestrebten hohen Leuchtdichte keinerlei störende Blendungen, insbesondere Reflexblendungen auftreten. Letzteres war bei bisher bekannten Lichtleitscheiben nur unter Einsatz zusätzlicher Prismatikfolien oder opaler Folien erreichbar.

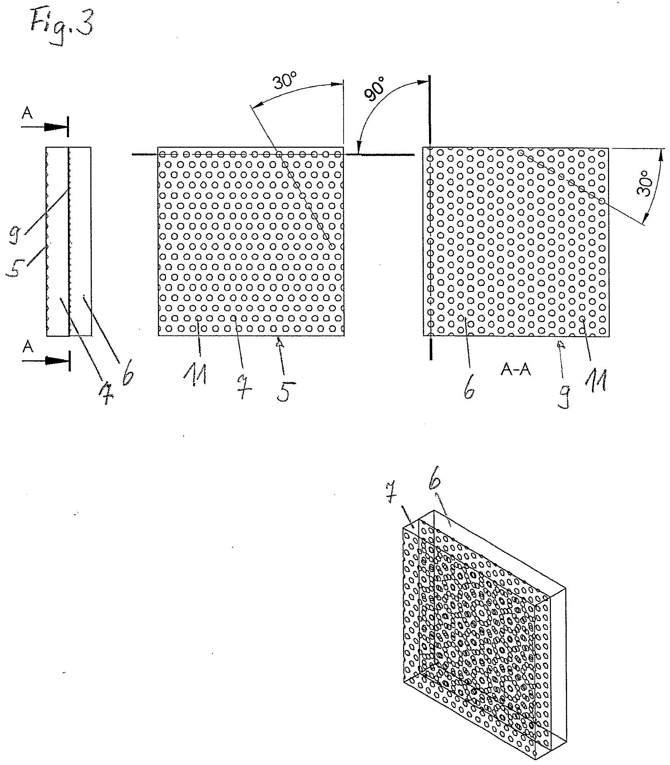

Fig. 3 zeigt ein Beispiel einer nicht zur Erfindung gehörenden aus Teil-Lichtleitscheiben 6, 7 bestehende zweiteilige Lichtleitscheibe, wobei jede dieser Teil-Lichtleitscheiben 6, 7 eine einseitige Prägung zur Bildung des erforderlichen Punktrasters aufweist. Die beiden identisch ausgebildeten Teil-Lichtscheiben sind in der Weise zur Gesamt-Lichtleitscheibe zusammengesetzt, dass ein erstes Strukturmuster sich an einer äußeren Oberfläche 5 und das zweite Strukturmuster 9 sich an der Berührungsfläche zwischen beiden Teil-Lichtleitscheiben befindet. Die beiden Teil-Lichtleitscheiben 6, 7 sind dabei um 90° zueinander verdreht zusammengefügt, so dass sich die perspektivisch gezeigte Gesamt-Lichtleitscheibe ergibt, die funktionell wieder zu einer die Ausblendwirkung gewährleistenden virtuellen Mikroprismatik führt.

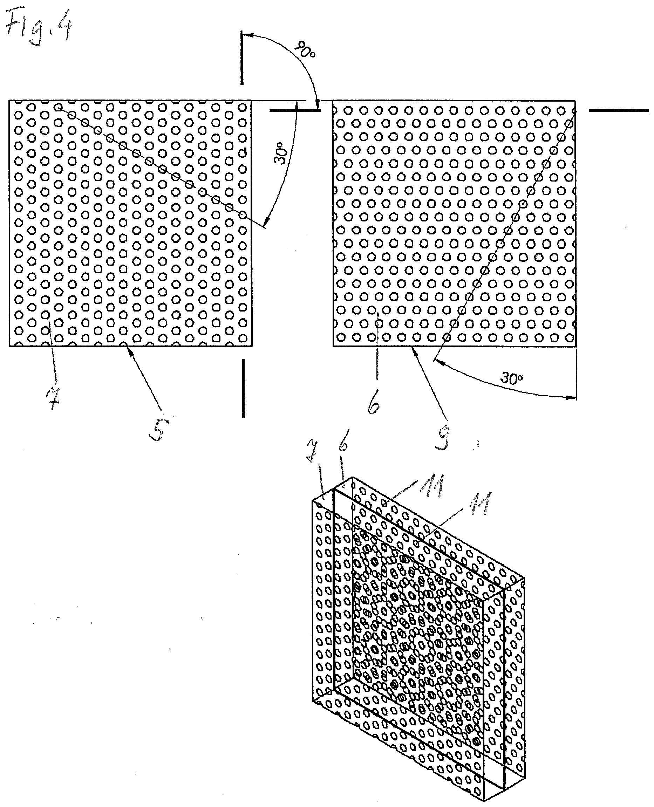

Fig. 4 zeigt analog zu Fig. 3 eine zweiteilige Lichtleitscheibe gemäß der Erfindung, bestehend aus einer ersten Teil-Lichtleitscheibe 6 und einer zweiten Teil-Lichtleitscheibe 7, die wiederum um 90° zueinander verdreht zu einer Einheit zusammengefügt sind. In diesem Falle befinden sich die vollflächigen Punktraster an den Außenseiten der Gesamt-Lichtleiteinheit, wie dies auch im Falle der einteiligen Lichtleitscheibe nach Fig. 2 der Fall ist.

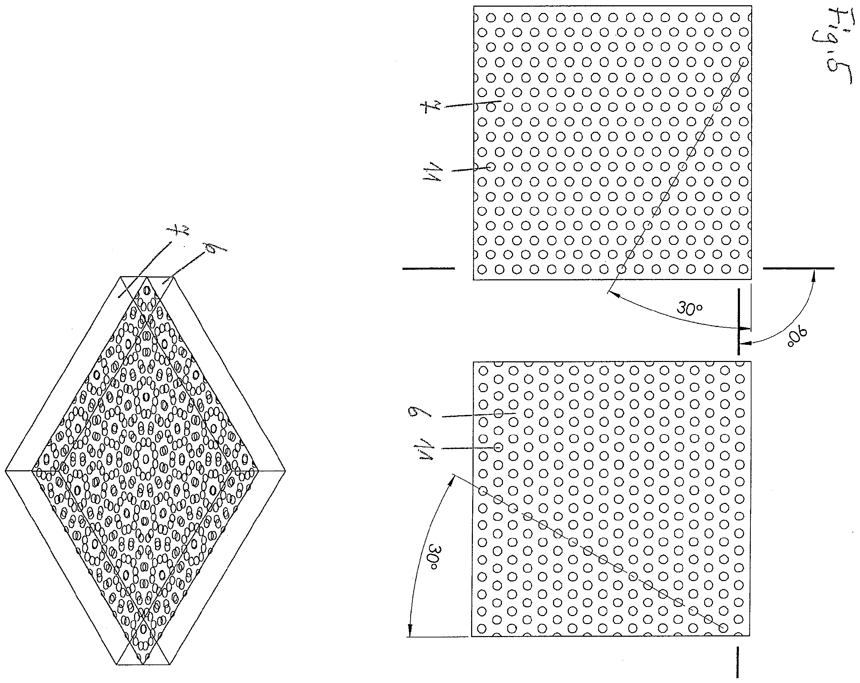

Fig. 5 zeigt wiederum ein Beispiel einer zweiteilige Lichtleitscheibe analog der Ausführungsform nach Fig. 3 oder 4, wobei in diesem Falle die vollflächigen Punktraster bzw. Strukturmuster 11 innenliegend vorgesehen sind, d.h. diese Punktraster liegen direkt aneinander.

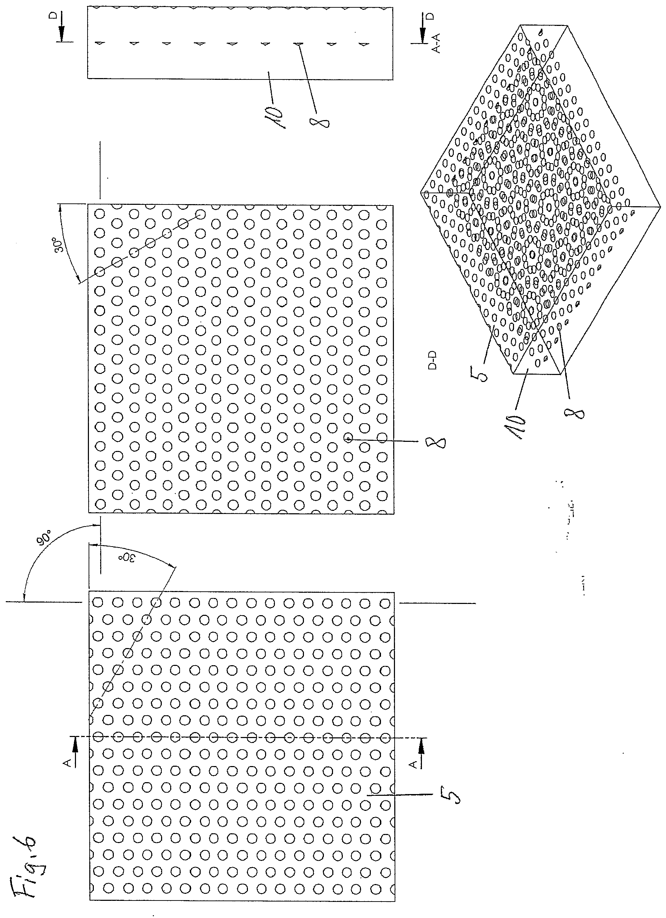

Fig. 6 zeigt ein weiteres Beispiel einer einteiligen Lichtleitscheibe 10, deren Besonderheit darin besteht, dass einerseits ein vollflächiges Strukturmuster 11 an einer Oberseite der Lichtleitscheibe 10 vorgesehen ist und andererseits ein zweites, entsprechend den bisherigen Ausführungsformen um 90° verdreht angeordnetes Strukturmuster im Inneren der Lichtleitscheibe 10, und zwar vorzugsweise im Bereich der Mitte der Lichtleitscheibe 10 ausgebildet ist. Erreicht wird dies durch einen Vorgang der Laserung. Aus der Schnittdarstellung A-A ist die Positionierung dieses Strukturmusters 8 innerhalb der Lichtleitscheibe 10 entnehmbar, und die Ausgestaltung dieses Strukturmusters 8 ist in der Ansicht D-D zu sehen.
Bei der zweiteiligen Ausgestaltung der Lichtleitscheibe 10 kann die Einkopplung von Licht von LED-Leisten in nur eine der Teil-Lichtscheiben 6 oder 7 oder von einer LED-Leiste in beide Teil-Lichtleitscheiben oder auch so erfolgen, dass beide Teil-Lichtscheiben 6, 7 direkt von jeweils einer zugehörigen LED-Leiste 14 mit Licht beaufschlagt werden. Dies ermöglicht es, die zweiteilig ausgebildete Lichtleitscheibe mit unterschiedlichen Lichttemperaturen zu beaufschlagen, um jeweils gewünschte Lichtmischungen zu erzielen, so dass bei dieser Art der Lichteinkopplung die doppelte Lichtleistung bei gleichem Scheibenformat realisiert werden kann und bei den Mischsituationen, bei denen die einzelnen Lichttemperaturen zur Mischung gedimmt werden, noch genügend Lichtstrom für die raumseitige Arbeitsfläche verfügbar ist.

Die erfindungsgemäße mehrteilige Lichtleitscheibe mit zwei oder mehr aufeinanderfolgend zueinander verdreht angeordneten Licht-Auskopplungsebenen von vorzugsweise identischer Struktur ist für alle Leuchten geeignet, bei denen eine stirnseitige Lichteinkopplung mit einer Mehrzahl von LEDs erfolgt und bei denen die geschilderten Vorteile der Durchsichtigkeit bei nicht eingeschalteter Leuchte und/oder die gezielte Aufteilung in Direktlicht und Indirektlicht und/oder optimalen Ausblendwirkungen angestrebt werden.

### Bezugszeichenliste

- 1: Träger- bzw. Flachrahmen
- 2: Ausblendschenkel
- 5: erste Oberfläche
- 6: Teil-Lichtleitscheibe
- 7: Teil-Lichtleitscheibe
- 8: interne Prismatikebene
- 9: zweite Oberfläche
- 10: Lichtleitscheibe
- 11: Punktraster bzw. Strukturmuster
- 14: LEDs
- 17: LED-Träger
- 18: elastische, wärmeleitende Zwischenschicht
- 22: Seile, Leiter

## Patentansprüche

1. Leuchte mit einer Lichtleitscheibenanordnung zur Innenraumbeleuchtung und zur Beleuchtung von Arbeitsplätzen, insbesondere Pendel- oder Anbauleuchte, die zumindest eine polierte Stirnfläche zur Einkopplung von Licht mittels einer Mehrzahl von an der jeweiligen Stirnfläche anliegenden LEDs aufweist, wobei die transparent und insbesondere klar durchsichtig ausgebildete Lichtleitscheibe (4) in zumindest zwei zueinander parallelen Ebenen jeweils ein vollflächiges, eine Lichtreflexion und Lichtstreuung bewirkendes, von Lichtauskopplungselementen gebildetes Punktraster (11) aufweist,
**dadurch gekennzeichnet,**
**dass** die Lichtleitscheibe zweiteilig ausgebildet ist und aus zwei aneinanderliegenden Teil-Lichtleitscheiben (6, 7) besteht, von denen jede an einer ihrer Oberflächen mit einem Punktraster (11) versehen ist,
**dass** die Teil-Lichtleitscheiben (6, 7) derart angeordnet sind, dass die Punktraster (11) an der Oberseite und der Unterseite der geschichteten Anordnung gelegen sind,
**dass** die in verschiedenen Ebenen gelegenen Punktraster einerseits zur Vorgabe des jeweils nach unten abgestrahlten Direktlichts und des nach oben abgestrahlten Indirektlichtanteils ausbildet und andererseits zur Erzielung einer raumseitigen Ausblendwirkung aufeinanderfolgend um einen vorgebbaren Winkel relativ zueinander verdreht angeordnet sind.

2. Leuchte nach Anspruch 1,
**dadurch gekennzeichnet,**
**dass** die die Punktraster (11) bildenden Lichtauskopplungselemente in jeder Ebene auf zueinander parallelen Geraden angeordnet und auf beabstandeten Geraden zueinander versetzt sind.

3. Leuchte nach Anspruch 1 oder 2,
**dadurch gekennzeichnet,**
**dass** in jeder Ebene gleiche oder gleichartige Punktraster (11) vorgesehen sind und diese Punktraster (11) zur Entblendung und zur Vermeidung von Reflexblendung um einen insbesondere 90° betragenden Winkel relativ zueinander verdreht angeordnet sind.

4. Leuchte nach einem oder mehreren der vorhergehenden Ansprüche,
**dadurch gekennzeichnet,**
**dass** die eine zweiseitige Lichtabstrahlung in Form von Direkt- und Indirektlicht bewirkenden Lichtauskopplungselemente der Punktraster (11) aus in die jeweilige Oberfläche dreidimensional eingeprägten oder auf die jeweilige Oberfläche aufgedruckten hochweißen Punkten bestehen oder durch Laserung auf einer Oberfläche oder im Inneren der jeweiligen Lichtleitscheibe gebildet sind.

5. Leuchte nach Anspruch 1,
**dadurch gekennzeichnet,**
**dass** aneinandergrenzend übereinanderliegende Stirnseiten jeweils Lichteinkopplungsflächen für eigene LEDs, insbesondere in Leistenform, bilden.

6. Leuchte nach Anspruch 4,
**dadurch gekennzeichnet**,
die in die jeweilige Oberfläche eingeprägten dreidimensionalen Prismen oder die auf die jeweilige Oberfläche aufgebrachten hochweißen Punkte weniger als 20 % der Gesamtoberfläche bedecken.

7. Leuchte nach Anspruch 6,
**dadurch gekennzeichnet**,
die dreidimensionalen Prismen oder die weißen Punkte einen Durchmesser von weniger als 0,5 mm aufweisen.

8. Leuchte nach einem der vorhergehenden Ansprüche,
**dadurch gekennzeichnet,**
**dass** beide aneinander liegenden Teil-Lichtleitscheiben (6, 7) von einer LED-Leiste mit Licht beaufschlagt werden, wobei jeweils etwa die Hälfte des zur Verfügung stehenden Lichts in eine der beiden Platten eingekoppelt wird.

9. Leuchte nach Anspruch 5,
**dadurch gekennzeichnet,**
**dass** die von jeweils einer zugehörigen LED-Leiste (14) mit Licht beaufschlagen Teil-Lichtscheiben (6, 7) mit unterschiedlichen Lichttemperaturen beaufschlagbar und die einzelnen Temperaturen zur Mischung insbesondere dimmbar sind.

## Claims

1. A luminaire comprising a light guide plate arrangement for interior illumination and for illuminating workplaces, in particular a suspended luminaire or a surface-mounted luminaire, which has at least one polished end face for coupling light by means of a plurality of LEDs contacting the respective end face, wherein
the light guide plate (4) which is configured as translucent and in particular as clearly transparent has, in at least two mutually parallel planes, a respective full-area dot matrix (11) which effects light reflection and light scatter and which is formed by light decoupling elements,
**characterized in that**
the light guide plate is formed in two parts and comprises two mutually contacting individual light guide plates (6, 7) of which each is provided with a dot matrix (11) at one of their surfaces;
**in that** the individual light guide plates (6, 7) are arranged such that the dot matrixes (11) are disposed at the upper side and at the lower side of the layered arrangement; and
**in that** the dot matrixes disposed in different planes are configured to predefine the respective downwardly irradiated direct light and the upwardly irradiated indirect light portion, on the one hand, and are arranged following one another rotated relative to one another about a predefinable angle to achieve a masking effect at the room side, on the other hand.

2. A luminaire in accordance with claim 1,
**characterized in that**
the light decoupling elements forming the dot matrixes (11) are arranged at mutually parallel straight lines in each plane and are offset from one another at spaced-apart straight lines.

3. A luminaire in accordance with claim 1 or claim 2,
**characterized in that**
dot matrixes (11) which are the same or of the same kind are provided in each plane and these dot matrixes (11) are arranged rotated relative to one another about an angle, in particular amounting to 90°, for glare elimination and for the avoidance of reflection glare.

4. A luminaire in accordance with one or more of the preceding claims,
**characterized in that**
the light decoupling elements of the dot matrixes (11) effecting a light irradiation at two sides in the form of direct light and indirect light comprise bright white dots which are stamped three-dimensionally into the respective surface or which are printed onto the respective surface or are formed by laser treatment at a surface or in the interior of the respective light guide plate.

5. A luminaire in accordance with claim 1,
**characterized in that**
end faces disposed above one another in an adjacent manner form respective light coupling surfaces for separate LEDs, in particular in strip form.

6. A luminaire in accordance with claim 4,
**characterized in that**
the three-dimensional prisms stamped into the respective surface or the bright white dots applied to the respective surface cover less than 20% of the total surface.

7. A luminaire in accordance with claim 6,
**characterized in that**
the three-dimensional prisms or the white dots have a diameter of less than 0.5 mm.

8. A luminaire in accordance with any one of the preceding claims,
**characterized in that**
both of the mutually contacting individual light guide plates (6, 7) are acted on by light from an LED strip, with approximately half the available light being respectively coupled into one of the two plates.

9. A luminaire in accordance with claim 5,
**characterized in that**
the individual light guide plates (6, 7) acted on by light from a respective associated LED strip (14) can be acted on at different light temperatures and the individual temperatures can in particular be dimmed for mixing.

## Revendications

1. Lampe comportant un agencement de disque conducteur de lumière pour l'éclairage d'un espace intérieur et pour l'éclairage de lieux de travail, en particulier lampe en suspension ou en saillie, qui présente au moins une face frontale polie pour le couplage de lumière à l'aide d'une pluralité de diodes électroluminescentes en appui contre la face frontale respective, dans lequel
le disque conducteur de lumière (4) réalisé transparent et en particulier transparent clair présente dans au moins deux plans parallèles l'un à l'autre une grille de points (11) respective sur toute la surface, procurant une réflexion de la lumière et une diffusion de la lumière et formée par des éléments de découplage de lumière,
**caractérisé en ce que**
le disque conducteur de lumière est réalisé en deux parties et se compose de deux disques conducteurs de lumière (6, 7) partiels dont chacun est pourvu, sur l'une de ses surfaces, d'une grille de points (11),
**en ce que** les disques conducteurs de lumière (6, 7) partiels sont agencés de telle sorte que les grilles de points (11) sont situées sur la face supérieure et sur la face inférieure de l'agencement en couches,
**en ce que** les grilles de points situées dans des plans différents sont réalisées d'une part pour donner respectivement la lumière directe rayonnée vers le bas et la part de lumière indirecte rayonnée vers le haut, et sont agencées d'autre part successivement en étant tournées les unes par rapport aux autres d'un angle prédéterminé pour obtenir un effet de masquage côté espace intérieur.

2. Lampe selon la revendication 1,
**caractérisée en ce que**
les éléments de découplage de lumière formant les grilles de points (11) sont agencés dans chaque plan sur des droites parallèles entre elles et sont décalés les uns par rapport aux autres sur des droites espacées.

3. Lampe selon la revendication 1 ou 2,
**caractérisée en ce que**
dans chaque plan sont prévues des grilles de points (11) identiques ou de type identique, et ces grilles de points (11) sont agencées en étant tournées les unes par rapport aux autres en particulier d'un angle de 90° pour obtenir un effet anti-éblouissant et pour éviter un éblouissement par réflexion.

4. Lampe selon l'une ou plusieurs des revendications précédentes,
**caractérisée en ce que**
les éléments de découplage de lumière des grilles de points (11), lesquels provoquent un rayonnement lumineux bilatéral sous forme de lumière directe et de lumière indirecte sont constitués par des points blancs brillants estampés tridimensionellement dans la surface respective ou imprimés sur la surface respective, ou sont formés au laser sur une surface ou à l'intérieur du disque conducteur de lumière respectif.

5. Lampe selon la revendication 1,
**caractérisée en ce que**
des faces frontales superposées adjacentes constituent respectivement des surfaces de couplage de lumière pour des diodes électroluminescentes déterminées, en particulier en forme de baguette.

6. Lampe selon la revendication 4,
**caractérisée en ce que**
les prismes tridimensionnels estampés dans la surface respective ou les points blancs brillants déposés sur la surface respective recouvrent moins de 20 % de la surface totale.

7. Lampe selon la revendication 6,
**caractérisée en ce que**
les prismes tridimensionnels ou les points blancs présentent un diamètre inférieur à 0,5 mm.

8. Lampe selon l'une des revendications précédentes,
**caractérisée en ce que**
les deux disques conducteurs de lumière (6, 7) partiels situés l'un contre l'autre sont illuminés avec une lumière par une baguette à diodes électroluminescentes, approximativement la moitié de la lumière disponible étant couplée dans l'une des deux plaques respectives.

9. Lampe selon la revendication 5,
**caractérisée en ce que**
les disques conducteurs de lumière (6, 7) partiels illuminés avec une lumière par une baguette à diodes électroluminescentes (14) associée respective sont susceptibles d'être sollicités avec différentes températures de lumière et les températures individuelles peuvent en particulier être graduées pour le mélange.
